# EUROPÄISCHE PATENTSCHRIFT

(11) **EP 1 247 006 B1**
(45) Veröffentlichungstag und Bekanntmachung des Hinweises auf die Patenterteilung: **08.10.2003**
(21) Anmeldenummer: 00987185.6
(22) Anmeldetag: 24.11.2000
(51) Int. Cl.: F01N 11/00, F02D 41/02

(54) **VERFAHREN ZUM BETREIBEN EINES SPEICHERKATALYSATORS EINER BRENNKRAFTMASCHINE**
METHOD FOR OPERATING A STORAGE CATALYST OF AN INTERNAL COMBUSTION ENGINE
PROCEDE POUR FAIRE FONCTIONNER UN CATALYSEUR ACCUMULATEUR D'UN MOTEUR A COMBUSTION INTERNE

(30) Priorität: 31.12.1999 DE 19963927
(43) Veröffentlichungstag der Anmeldung: 09.10.2002
(73) Patentinhaber: ROBERT BOSCH GMBH, 70442 Stuttgart (DE)
(72) Erfinder: BLUMENSTOCK, Andreas, 71638 Ludwigsburg (DE); WINKLER, Klaus, 71691 Freiberg (DE)
(86) Internationale Anmeldenummer: DE0004168
(87) Internationale Veröffentlichungsnummer: WO01049992

(56) Entgegenhaltungen:
- EP-A- 0 858 837
- EP-A- 0 943 792

## Beschreibung

### Stand der Technik

Die Erfindung betrifft ein Verfahren zum Betreiben eines Speicherkatalysators einer Brennkraftmaschine insbesondere eines Kraftfahrzeugs, bei dem der Speicherkatalysator mit Stickoxiden be- und entladen wird. Ebenfalls betrifft die Erfindung ein Steuergerät für eine Brennkraftmaschine insbesondere eines Kraftfahrzeugs sowie eine Brennkraftmaschine insbesondere für ein Kraftfahrzeug.

Ein derartiges Verfahren, ein derartiges Steuergerät und eine derartige Brennkraftmaschine sind beispielsweise bei einer sogenannten Benzin-Direkteinspritzung bekannt. Dort wird der Kraftstoff in einem Homogenbetrieb während der Ansaugphase oder in einem Schichtbetrieb während der Verdichtungsphase in den Brennraum der Brennkraftmaschine eingespritzt. Der Homogenbetrieb ist vorzugsweise für den Vollastbetrieb der Brennkraftmaschine vorgesehen, während der Schichtbetrieb für den Leerlauf- und Teillastbetrieb geeignet ist. Beispielsweise in Abhängigkeit von dem angeforderten Drehmoment wird bei einer derartigen direkteinspritzenden Brennkraftmaschine zwischen den genannten Betriebsarten umgeschaltet.

Insbesondere zur Ausführung des Schichtbetriebs ist es erforderlich, daß ein Speicherkatalysator vorhanden ist, mit dem entstehende Stickoxide zwischengespeichert werden können, um sie während eines nachfolgenden Homogenbetriebs in einem Dreiwegekatalysator zu reduzieren. Dieser Speicherkatalysator wird im Schichtbetrieb mit den Stickoxiden beladen und im Homogenbetrieb wieder entladen. Dieses Be- und Entladen führt zu einer Alterung des Speicherkatalysators und damit zu einer Verringerung der Speicherfähigkeit desselben.

Dokument EP0858837A offenbart ein Verfahren zum Betreiben eines Speicherkatalysators einer Brennkraftmaschine, wobei ein reversibler Alterungsverlauf und ein nicht reversibler Alterungsverlauf des Speicherkatalysators ermittelt werden. Hierbei wird dei thermische Alterung des Speicherkatalysators (nicht reversibler Alterungsverlauf) in Abhängigkeit von der Last und der Drehzahl und/oder in Abhängigkeit von der Katalysatortemperatur bestimmt.

### Aufgabe und Vorteile der Erfindung

Aufgabe der Erfindung ist es, ein Verfahren zum Betreiben eines Speicherkatalysators einer Brennkraftmaschine zu schaffen, mit dem die Alterung des Speicherkatalysators erkannt werden kann.

Diese Aufgabe wird bei einem Verfahren der eingangs genannten Art erfindungsgemäß dadurch gelöst, daß mehrere Alterungszustände des Speicherkatalysators ermittelt werden, und daß aus den Alterungszuständen ein reversibler Alterungsverlauf und ein nicht-reversibler Alterungsverlauf ermittelt wird. Bei einem Steuergerät und einer Brennkraftmaschine der jeweils eingangs genannten Art wird die Aufgabe entsprechend gelöst.

Bei dem reversiblen Alterungsverlauf handelt es sich um eine schwefelbedingte Verminderung der Speicherfähigkeit des Speicherkatalysators. Der Schwefel kann beispielsweise in dem Kraftstoff oder zumindest in dem entstehenden Abgas der Brennkraftmaschine enthalten sein. Bei dem nicht-reversiblen Alterungsverlauf handelt es sich um eine natürliche, benutzungsbedingte Verminderung der Speicherfähigkeit des Speicherkatalysators. Diese entsteht insbesondere durch die thermische Beanspruchung desselben nach einer entsprechend langen Betriebsdauer.

Durch die Ermittlung des reversiblen und des nicht-reversiblen Alterungsverlaufs kann von dem Steuergerät genau unterschieden werden, ob eine Regenerierung des Speicherkatalysators möglich ist, oder ob der Speicherkatalysator tatsächlich verbraucht ist. Dadurch kann vermieden werden, daß ein an sich noch regenerierbarer Speicherkatalysator als defekt erkannt und beispielsweise ausgetauscht wird.

Zur Unterscheidung des reversiblen und des nicht-reversiblen Alterungsverlaufs wird die Steigung des reversiblen Alterungsverlaufs mit der Steigung des nicht-reversiblen Alterungsverlaufs verglichen. Die Steigung des reversiblen Alterungsverlaufs ist dabei größer als die Steigung des nicht-reversiblen Alterungsverlaufs. Damit wird eine sichere Unterscheidung der beiden Alterungsverläufe gewährleistet.

Bei einer vorteilhaften Weiterbildung der Erfindung wird der reversible Alterungsverlauf aus den aufeinandervogenden Alterungszuständen zwischen zwei Regenerierungen des Speicherkatalysators ermittelt. Des weiteren wird der nicht-reversible Alterungsverlauf aus den Alterungszuständen jeweils nach einer Regenerierung des Speicherkatalysators ermittelt. Damit ist es in einfacher Weise möglich, die verschiedenen Alterungsverläufe voneinander zu unterscheiden.

Bei einer vorteilhaften Ausgestaltung der Erfindung wird der Speicherkatalysator nach Erreichen eines vorgebbaren reversiblen Alterungszustands regeneriert. Damit wird gewährleistet, daß der Speicherkatalysator aufgrund einer reversiblen Alterung nicht ausgetauscht, sondern nur regeneriert wird.

Bei einer weiteren vorteilhaften Ausgestaltung der Erfindung wird der Speicherkatalysator nach Erreichen eines vorgebbaren nicht-reversiblen Alterungszustands als defekt erkannt. Der Speicherkatalysator wird damit erst dann als defekt erkannt, wenn er nicht mehr oder nur noch geringfügig regenerierbar ist. Ein Austausch des Speicherkatalysators wird damit vermieden, bis der nicht-reversible Alterungsverlauf einen vorgebbaren Schwellwert erreicht.

Von besonderer Bedeutung ist die Realisierung des erfindungsgemäßen Verfahrens in der Form eines Steuerelements, das für ein Steuergerät einer Brennkraftmaschine, insbesondere eines Kraftfahrzeugs, vorgesehen ist. Dabei ist auf dem Steuerelement ein Programm abgespeichert, das auf einem Rechengerät, insbesondere auf einem Mikroprozessor, ablauffähig und zur Ausführung des erfindungsgemäßen Verfahrens geeignet ist. In diesem Fall wird also die Erfindung durch ein auf dem Steuerelement abgespeichertes Programm realisiert, so daß dieses mit dem Programm versehene Steuerelement in gleicher Weise die Erfindung darstellt wie das Verfahren, zu dessen Ausführung das Programm geeignet ist. Als Steuerelement kann insbesondere ein elektrisches Speichermedium zur Anwendung kommen, beispielsweise ein Read-Only-Memory oder ein Flash-Memory.

Weitere Merkmale, Anwendungsmöglichkeiten und Vorteile der Erfindung ergeben sich aus der nachfolgenden Beschreibung von Ausführungsbeispielen der Erfindung, die in den Figuren der Zeichnung dargestellt sind. Dabei bilden alle beschriebenen oder dargestellten Merkmale für sich oder in beliebiger Kombination den Gegenstand der Erfindung, unabhängig von ihrer Zusammenfassung in den Patentansprüchen oder deren Rückbeziehung sowie unabhängig von ihrer Formulierung bzw. Darstellung in der Beschreibung bzw. in der Zeichnung.

Ausführungsbeispiele der Erfindung
- Figur 1: zeigt eine schematische Darstellung eines Ausführungsbeispiels einer erfindungsgemäßen Brennkraftmaschine, und
- Figur 2: zeigt ein schematisches Schaubild der Alterung des Speicherkatalysators der Brennkraftmaschine der Figur 1.

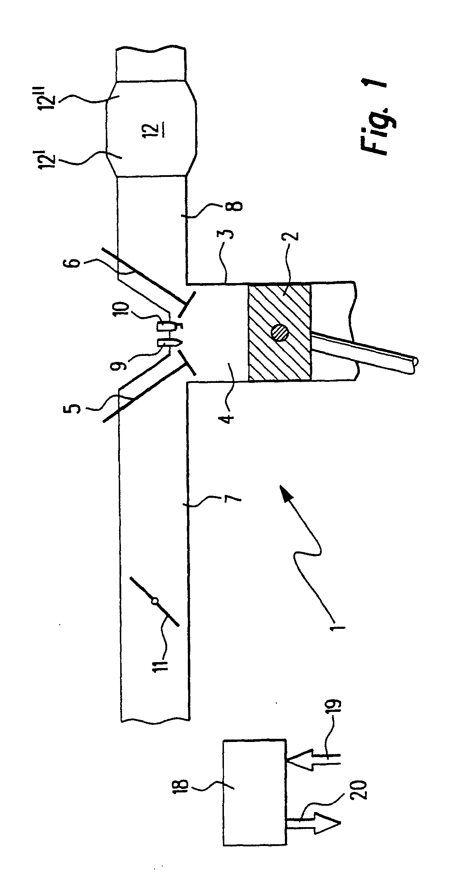

In der Figur 1 ist eine Brennkraftmaschine 1 eines Kraftfahrzeugs dargestellt, bei der ein Kolben 2 in einem Zylinder 3 hin- und herbewegbar ist. Der Zylinder 3 ist mit einem Brennraum 4 versehen, der unter anderem durch den Kolben 2, ein Einlaßventil 5 und ein Auslaßventil 6 begrenzt ist. Mit dem Einlaßventil 5 ist ein Ansaugrohr 7 und mit dem Auslaßventil 6 ist ein Abgasrohr 8 gekoppelt.

Im Bereich des Einlaßventils 5 und des Auslaßventils 6 ragen ein Einspritzventil 9 und eine Zündkerze 10 in den Brennraum 4. Über das Einspritzventil 9 kann Kraftstoff in den Brennraum 4 eingespritzt werden. Mit der Zündkerze 10 kann der Kraftstoff in dem Brennraum 4 entzündet werden.

In dem Ansaugrohr 7 ist eine drehbare Drosselklappe 11 untergebracht, über die dem Ansaugrohr 7 Luft zuführbar ist. Die Menge der zugeführten Luft ist abhängig von der Winkelstellung der Drosselklappe 11. In dem Abgasrohr 8 ist ein Katalysator 12 untergebracht, der der Reinigung der durch die Verbrennung des Kraftstoffs entstehenden Abgase dient.

Bei dem Katalysator 12 handelt es sich um einen Speicherkatalysator 12', der mit einem Dreiwegekatalysator 12'' kombiniert ist. Der Katalysator 12 ist damit unter anderem dazu vorgesehen, Stickoxide (NOx) zwischenzuspeichern.

Ein Steuergerät 18 ist von Eingangssignalen 19 beaufschlagt, die mittels Sensoren gemessene Betriebsgrößen der Brennkraftmaschine 1 darstellen. Das Steuergerät 18 erzeugt Ausgangssignale 20, mit denen über Aktoren bzw. Steller das Verhalten der Brennkraftmaschine 1 beeinflußt werden kann. Unter anderem ist das Steuergerät 18 dazu vorgesehen, die Betriebsgrößen der Brennkraftmaschine 1 zu steuern und/oder zu regeln. Zu diesem Zweck ist das Steuergerät 18 mit einem Mikroprozessor versehen, der in einem Speichermedium, insbesondere in einem Flash-Memory ein Programm abgespeichert hat, das dazu geeignet ist, die genannte Steuerung und/oder Regelung durchzuführen.

In einer ersten Betriebsart, einem sogenannten Homogenbetrieb der Brennkraftmaschine 1, wird die Drosselklappe 11 in Abhängigkeit von dem erwünschten Drehmoment teilweise geöffnet bzw. geschlossen. Der Kraftstoff wird von dem Einspritzventil 9 während einer durch den Kolben 2 hervorgerufenen Ansaugphase in den Brennraum 4 eingespritzt. Durch die gleichzeitig über die Drosselklappe 11 angesaugte Luft wird der eingespritzte Kraftstoff verwirbelt und damit in dem Brennraum 4 im wesentlichen gleichmäßig verteilt. Danach wird das Kraftstoff/Luft-Gemisch während der Verdichtungsphase verdichtet, um dann von der Zündkerze 10 entzündet zu werden. Durch die Ausdehnung des entzündeten Kraftstoffs wird der Kolben 2 angetrieben. Das entstehende Drehmoment hängt im Homogenbetrieb unter anderem von der Stellung der Drosselklappe 11 ab. Im Hinblick auf eine geringe Schadstoffentwicklung wird das Kraftstoff/Luft-Gemisch möglichst auf Lambda gleich Eins eingestellt.

In einer zweiten Betriebsart, einem sogenannten Schichtbetrieb der Brennkraftmaschine 1, wird die Drosselklappe 11 weit geöffnet. Der Kraftstoff wird von dem Einspritzventil 9 während einer durch den Kolben 2 hervorgerufenen Verdichtungsphase in den Brennraum 4 eingespritzt, und zwar örtlich in die unmittelbare Umgebung der Zündkerze 10 sowie zeitlich in geeignetem Abstand vor dem Zündzeitpunkt. Dann wird mit Hilfe der Zündkerze 10 der Kraftstoff entzündet, so daß der Kolben 2 in der nunmehr folgenden Arbeitsphase durch die Ausdehnung des entzündeten Kraftstoffs angetrieben wird. Das entstehende Drehmoment hängt im Schichtbetrieb weitgehend von der eingespritzten Kraftstoffmasse ab. Im wesentlichen ist der Schichtbetrieb für den Leerlaufbetrieb und den Teillastbetrieb der Brennkraftmaschine 1 vorgesehen.

Der Speicherkatalysator 12' des Katalysators 12 wird während des Schichtbetriebs mit Stickoxiden beladen. In einem nachfolgenden Homogenbetrieb wird der Speicherkatalysator 12' wieder entladen und die Stickoxide werden von dem Dreiwegekatalysator 12' reduziert.

Der Speicherkatalysator 12' nimmt während seiner fortlaufenden Be- und Entladung mit Stickoxiden mit der Zeit Schwefel auf. Dies führt zu einer Einschränkung der Speicherfähigkeit des Speicherkatalysators 12', die nachfolgend als Alterung bezeichnet wird.

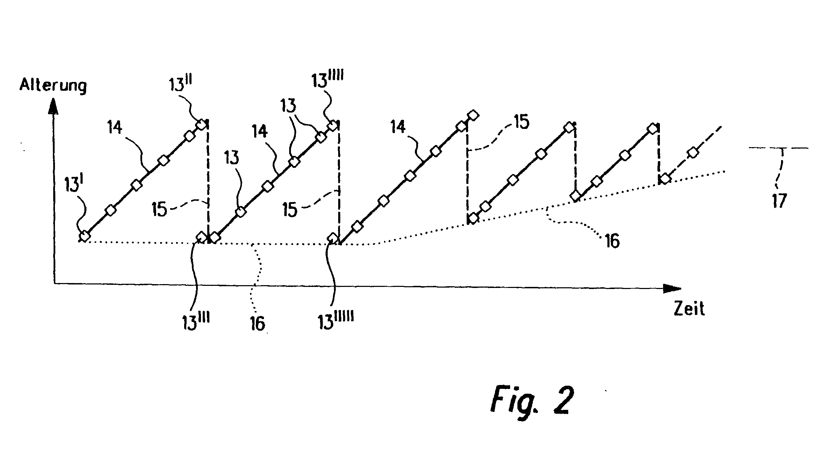

In der Figur 2 ist die Alterung des Speicherkatalysators 12' über der Zeit aufgetragen. Ein Wert für diese Alterung kann durch entsprechende Diagnoseverfahren von dem Steuergerät 18 ermittelt werden. Derartige Diagnoseverfahren können beispielsweise auf der Messung von NOx-Emissionen nach dem Speicherkatalysator 12' beruhen.

In der Figur 2 ist die Durchführung von derartigen Diagnoseverfahren und der daraus resultierende Wert einer Alterung jeweils durch einen Punkt 13 gekennzeichnet. Diese Alterungszustände der Punkte 13 sind durch eine durchgezogene Linie 14 miteinander verbunden. Die Linie 14 stellt damit einen Alterungsverlauf dar.

Ein erster Punkt 13' stellt die erstmalige Durchführung einer Diagnose des Speicherkatalysators 12' dar, mit der ein erster Alterungszustand ermittelt wird. In darauffolgenden Zeitpunkten werden weitere Diagnosen durchgeführt, aus denen sich weitere Alterungszustände ergeben. Diese weiteren Alterungszustände ergeben dabei aufgrund ihrer immer größer werdenden Werte einen Alterungsverlauf, der einer Alterung des Speicherkatalysators 12' entspricht. Wie bereits erwähnt wurde, wird durch die Alterung die Speicherfähigkeit des Speicherkatalysators 12' vermindert.

In einem Punkt 13'' wird dann ein Alterungszustand erreicht, aufgrund dessen von dem Steuergerät 18 eine Schwefelregenerierung des Speicherkatalysators 12' durchgeführt wird. Diese Schwefelregenerierung ist in der Figur 2 durch eine gestrichelte Linie 15 angedeutet und kann beispielsweise durch einen fetten Betriebszustand der Brennkraftmaschine 1 bei gleichzeitig hohen Abgastemperaturen erreicht werden. Bei dieser Regenerierung wird der Schwefel aus dem Speicherkatalysator 12' ausgetragen. Dies führt zu einer weitgehenden Rückführung des Speicherkatalysators 12' in seinen anfänglichen Zustand, insbesondere zu seiner anfänglichen Speicherfähigkeit. Dies ist in der Figur 2 durch den Punkt 13''' dargestellt, der etwa dem anfänglichen Alterungszustand des Speicherkatalysators 12' entspricht.

Danach werden von dem Steuergerät 18 erneut die vorgenannten Diagnoseverfahren durchgeführt, die jeweils zu weiteren Punkten 13 und damit zu einer weiteren Linie 14 führen. In einem Punkt 13'''' wird von dem Steuergerät 18 entsprechend der Linie 15 erneut eine Regenerierung des Speicherkatalysators 12' durchgeführt, die wiederum zu einem Punkt 13''''' und damit etwa zu einer Erlangung der anfänglichen Speicherfähigkeit desselben führt.

Wie erläutert wurde, entsteht die bisher diskutierte Alterung aufgrund der Einlagerung von Schwefel in dem Speicherkatalysator 12'. Der Schwefel kann sich dabei in dem der Brennkraftmaschine 1 zugeführten Kraftstoff bzw. dem daraus entstehenden Abgas befinden. Diese Alterung ist reversibel und kann durch die beschriebene Regenerierung wieder weitgehend behoben werden.

Zusätzlich zu der vorstehenden reversiblen Alterung unterliegt der Speicherkatalysator 12' auch einer nicht-reversiblen Alterung. Diese entsteht aufgrund des andauernden Be- und Entladens des Speicherkatalysators 12' und stellt letztlich die wirkliche natürliche Alterung des Speicherkatalysators 12' dar.

In der Figur 2 ist die natürliche, nicht-reversible Alterung mit einer Linie 16 dargestellt. Diese Linie 16 ergibt sich aus den Punkten 13', 13''', 13''''' usw., also immer aus denjenigen Alterungszuständen, die der Speicherkatalysator 12' unmittelbar nach einer Schwefelregenerierung aufweist.

Wie der Figur 2 zu entnehmen ist, steigt die Linie 16 ab dem Punkt 13''''' langsam an. Die Steigung der Linie 16 ist dabei wesentlich geringer als die Steigung der Linien 14. Der Anstieg der Linie 16 ist gleichbedeutend mit einer bleibenden, immer geringer werdenden Speicherfähigkeit des Speicherkatalysators 12'. Dies zeigt sich auch darin, daß die Rückführung der Speicherfähigkeit des Speicherkatalysators 12' durch eine Schwefelregenerierung, also letztlich die Länge der Linien 15, immer geringer wird.

Wie erwähnt, ist der Verlust an Speicherfähigkeit des Speicherkatalysators 12', der sich aus der ansteigenden Linie 16 ergibt, nicht reversibel. Dies hat zur Folge, daß die Speicherfähigkeit langfristig gegen Null geht. Dann muß der Speicherkatalysator 12' ausgetauscht werden.

Wie ebenfalls erwähnt, ist die Steigung der Linie 16 der natürlichen, nicht-reversiblen Alterung wesentlich geringer als die Steigung der Linien 14 der schwefelbedingten, reversiblen Alterung. Durch diese unterschiedlichen Steigungen kann das Steuergerät 18 die natürliche, nicht-reversible Alterung von der schwefelbedingten, reversiblen Alterung unterscheiden.

In dem Steuergerät 18 ist ein Schwellwert 17 abgespeichert, der beispielsweise in Abhängigkeit von den Punkten 13'', 13'''', usw., also letztlich in Abhängigkeit von den unmittelbar vor einer Regenierung vorhandenen Alterungszuständen vorgegeben werden kann. Erreicht die Linie 16 diesen Schwellwert 17, so wird von dem Steuergerät 18 erkannt, daß der Speicherkatalysator 12' nicht mehr brauchbar ist. Dies wird dem Nutzer der Brennkraftmaschine 1 oder einer Werkstatt von dem Steuergerät 18 angezeigt.

Aufgrund der Unterscheidung der Linien 14 und der Linie 16 durch das Steuergerät 18 wird eine Defektmeldung des Speicherkatalysators 12' aufgrund einer reversiblen Alterung vermieden, selbst wenn ein Punkt 13 einer der Linien 14 den Schwellwert 17 überschreitet.

## Patentansprüche

1. Verfahren zum Betreiben eines Speicherkatalysators (12') einer Brennkraftmaschine (1) insbesondere eines Kraftfahrzeugs, bei dem der Speicherkatalysator (12') mit Stickoxiden be- und entladen wird, bei dem mehrere Alterungszustände (Punkte 13) des Speicherkatalysators (12') ermittelt werden, und bei dem aus den Alterungszuständen (Punkte 13) ein reversibler Alterungsverlauf (Linien 14) und ein nicht-reversibler Alterungsverlauf (Linie 16) ermittelt wird, **dadurch gekennzeichnet, dass** zur Unterscheidung des reversiblen und des nicht-reversiblen Alterungsverlaufs die Steigung des reversiblen Alterungsverlaufs (Linien 14) mit der Steigung des nicht-reversiblen Alterungsverlaufs (Linie 16) verglichen wird.

2. Verfahren nach Anspruch 1, **dadurch gekennzeichnet, daß** der reversible Alterungsverlauf (Linien 14) aus den aufeinanderfolgenden Alterungszuständen (Punkten 13) zwischen zwei Regenerierungen des Speicherkatalysators (12') ermittelt wird.

3. Verfahren nach einem der Ansprüche 1 oder 2, **dadurch gekennzeichnet, daß** der nicht-reversible Alterungsverlauf (Linie 16) aus den Alterungszuständen (Punnkten 13''', 13''''', usw.) jeweils nach einer Schwefelregenerierung des Speicherkatalysators (12') ermittelt wird.

4. Verfahren nach einem der Ansprüche 1 bis 3, **dadurch gekennzeichnet, daß** die Alterungszustände (Punkte 13) in Abhängigkeit von NOx-Emissionen nach dem Speicherkatalysator (12') ermittelt werden.

5. Verfahren nach einem der Ansprüche 1 bis 4, **dadurch gekennzeichnet, daß** der Speicherkatalysator (12') nach Erreichen eines vorgebbaren reversiblen Alterungszustands (Punkte 13'', 13'''', usw.) regeneriert wird.

6. Verfahren nach einem der Ansprüche 1 bis 5, **dadurch gekennzeichnet, daß** der Speicherkatalysator (12') nach Erreichen eines vorgebbaren nicht-reversiblen Alterungszustands (Schwellwert 17) als defekt erkannt wird.

7. Steuergerät (18) für eine Brennkraftmaschine (1) insbesondere eines Kraftfahrzeugs, wobei die Brennkraftmaschine (1) einen Speicherkatalysator (12') aufweist, der mit Stickoxiden be- und entladen werden kann, wobei durch das Steuergerät (18) mehrere Alterungszustände (Punkte 13) des Speicherkatalysators (12') ermittelbar sind, und wobei durch das Steuergerät (18) aus den Alterungszuständen (Punkte 13) ein reversibler Alterungsverlauf (Linien 14) und ein nicht-reversibler Alterungsverlauf (Linie 16) ermittelbar ist, **dadurch gekennzeichnet, dass** durch das Steuergerät (18) zur Unterscheidung des reversiblen und des nicht-reversiblen Alterungsverlaufs die Steigung des reversiblen Alterungsverlaufs (Linien 14) mit der Steigung des nicht-reversiblen Alterungsverlaufs (Linie 16) verglichen wird.

8. Speichermedium, insbesondere Flash-Memory, zur Anwendung in einem Steuergerät (18) nach dem Anspruch 7, auf dem ein Programm abgespeichert ist, das auf einem Rechengerät, insbesondere auf einem Mikroprozessor, ablauffähig und zur Ausführung eines Verfahrens nach einem der Ansprüche 1 bis 6 geeignet ist.

9. Brennkraftmaschine (1) insbesondere für ein Kraftfahrzeug mit einem Speicherkatalysator (12'), der mit Stickoxiden beund entladen werden kann, und mit einem Steuergerät (18), wobei durch das Steuergerät (18) mehrere Alterungszustände (Punkte 13) des Speicherkatalysators (12') ermittelbar sind, und wobei durch das Steuergerät (18) aus den Alterungszuständen (Punkte 13) ein reversibler Alterungsverlauf (Linien 14) und ein nicht-reversibler Alterungsverlauf (Linie 16) ermittelbar ist, **dadurch gekennzeichnet, dass** durch das Steuergerät (18) zur Unterscheidung des reversiblen und des nicht-reversiblen Alterungsverlaufs die Steigung des reversiblen Alterungsverlaufs (Linien 14) mit der Steigung des nicht-reversiblen Alterungsverlaufs (Linie 16) verglichen wird.

## Claims

1. Method for operating a storage catalytic converter (12') of an internal combustion engine (1) in particular of a motor vehicle, in which the levels of nitrogen oxides in the storage catalytic converter (12') increase and are reduced again, in which a plurality of ageing states (points 13) of the storage catalytic converter (12') are determined, and in which a reversible ageing curve (lines 14) and an irreversible ageing curve (line 16) are determined from the ageing states (points 13), **characterized in that**, to distinguish between the reversible and irreversible ageing curves, the inclination of the reversible ageing curve (lines 14) is compared with the inclination of the irreversible ageing curve (line 16).

2. Method according to Claim 1, **characterized in that** the reversible ageing curve (lines 14) is determined from the successive ageing states (points 13) between two regenerations of the storage catalytic converter (12').

3. Method according to either of Claims 1 or 2, **characterized in that** the irreversible ageing curve (line 16) is determined from the ageing states (points 13''', 13''''', etc.) which in each case follow a sulphur regeneration of the storage catalytic converter (12').

4. Method according to one of Claims 1 to 3, **characterized in that** the ageing states (points 13) are determined as a function of NOx emissions downstream of the storage catalytic converter (12').

5. Method according to one of Claims 1 to 4, **characterized in that** the storage catalytic converter (12') is regenerated after a predeterminable reversible ageing state (points 13", 13"", etc.) is reached.

6. Method according to one of Claims 1 to 5, **characterized in that** the storage catalytic converter (12') is recorded as defective after a predeterminable irreversible ageing state (threshold value 17) is reached.

7. Control unit (18) for an internal combustion engine (1) in particular of a motor vehicle, the internal combustion engine (1) having a storage catalytic converter (12') in which the levels of nitrogen oxides can increase and be reduced again, it being possible for the control unit (18) to determine a plurality of ageing states (points 13) of the storage catalytic converter (12'), and it being possible for the control unit (18) to determine a reversible ageing curve (lines 14) and an irreversible ageing curve (line 16) from the ageing states (points 13), **characterized in that**, to distinguish between the reversible and irreversible ageing curves, the control unit (18) compares the inclination of the reversible ageing curve (lines 14) with the inclination of the irreversible ageing curve (line 16).

8. Memory medium, in particular flash memory, for use in a control unit (18) according to Claim 7, which memory medium stores a program which can run on a computational unit, in particular on a microprocessor, and which is suitable for carrying out a method according to one of Claims 1 to 6.

9. Internal combustion engine (1) in particular for a motor vehicle having a storage catalytic converter (12'), in which the levels of nitrogen oxides can increase and be reduced again, and having a control unit (18), it being possible for the control unit (18) to determine a plurality of ageing states (points 13) of the storage catalytic converter (12'), and it being possible for the control unit (18) to determine a reversible ageing curve (lines 14) and an irreversible ageing curve (line 16) from the ageing states (points 13), **characterized in that**, to distinguish between the reversible and irreversible ageing curves, the control unit (18) compares the inclination of the reversible ageing curve (lines 14) with the inclination of the irreversible ageing curve (line 16).

## Revendications

1. Procédé de fonctionnement d'un catalyseur d'accumulation (12') d'un moteur à combustion interne (1), en particulier d'un véhicule automobile, dans lequel le catalyseur d'accumulation (12') est chargé et déchargé en oxyde d'azote, plusieurs états de vieillissement (points 13) du catalyseur d'accumulation (12') sont déterminés et, à partir des états de vieillissement (points 13), un vieillissement réversible (lignes 14) et un vieillissement irréversible (ligne 16) sont déterminés,
**caractérisé en ce que**
pour distinguer le vieillissement réversible du vieillissement irréversible, la pente ascendante du vieillissement réversible (lignes 14) est comparée avec la pente ascendante du vieillissement irréversible (ligne 16).

2. Procédé selon la revendication 1,
**caractérisé en ce que**
le vieillissement réversible (lignes 14) est déterminé à partir des états successifs de vieillissement (points 13) entre deux régénérations du catalyseur d'accumulation (12').

3. Procédé selon l'une quelconque des revendications 1 ou 2,
**caractérisé en ce que**
le vieillissement irréversible (ligne 16) est déterminé à partir des états de vieillissement (points 13"', 13'"", etc.) après chaque régénération du soufre du catalyseur d'accumulation (12').

4. Procédé selon l'une quelconque des revendications 1 à 3,
**caractérisé en ce que**
les états de vieillissement (points 13) sont déterminés en fonction d'émissions de NOx après le catalyseur d'accumulation(12').

5. Procédé selon l'une quelconque des revendications 1 à 4,
**caractérisé en ce que**
le catalyseur d'accumulation (12') est régénéré après un état de vieillissement réversible (points 13", 13"", etc.) pouvant être prédéfini.

6. Procédé selon l'une quelconque des revendications 1 à 5,
**caractérisé en ce que**
le catalyseur d'accumulation (12'), après avoir atteint un état de vieillissement irréversible (valeur seuil 17) pouvant être prédéfini peut être déclaré défectueux.

7. Appareil de commande (18) pour un moteur à combustion interne (1), en particulier d'un véhicule automobile, dans lequel le moteur à combustion interne (1) présente un catalyseur d'accumulation (12') qui peut être chargé et déchargé en oxyde d'azote, dans lequel un appareil de commande (18), peut déterminer plusieurs états de vieillissement (points 13) du catalyseur d'accumulation (12') et à partir des états de vieillissement (points 13), un vieillissement réversible (lignes 14) et un vieillissement irréversible (ligne 16),
**caractérisé en ce que**
pour distinguer le vieillissement réversible du vieillissement irréversible, l'appareil de commande (18) compare la pente ascendante du vieillissement réversible (lignes 14) avec la pente ascendante du vieillissement irréversible (ligne 16).

8. Support d'accumulation, en particulier mémoire Flash, pour utilisation dans un appareil de commande (18) selon la revendication 7, dans lequel est stocké un programme qu'il est possible de faire exécuter par un calculateur, en particulier par un microprocesseur, et qui est adapté à l'exécution d'un procédé selon l'une quelconque des revendications 1 à 6.

9. Moteur à combustion interne (1), en particulier pour un véhicule automobile, comportant un catalyseur d'accumulation (12') qui peut être chargé et déchargé en oxyde d'azote, et comportant un appareil de commande (18), qui peut déterminer plusieurs états de vieillissement (points 13) du catalyseur d'accumulation (12') et, à partir des états de vieillissement (points 13), un vieillissement réversible (lignes 14) et un vieillissement irréversible (ligne 16),
**caractérisé en ce que**
pour distinguer le vieillissement réversible du vieillissement irréversible, l'appareil de commande (18) compare la pente ascendante du vieillissement réversible (lignes 14) avec la pente ascendante du vieillissement irréversible (ligne 16).
